Europäisches Patentamt

European Patent Office

Office européen des brevets

(11) Veröffentlichungsnummer: **0 129 631**
**A1**

## (12) EUROPÄISCHE PATENTANMELDUNG

(21) Anmeldenummer: **83710042.9**

(22) Anmeldetag: **22.06.83**

(51) Int. Cl.⁴: **F 24 D 3/00**
**F 24 H 1/00**

(43) Veröffentlichungstag der Anmeldung:
**02.01.85 Patentblatt 85/1**

(84) Benannte Vertragsstaaten:
**AT BE CH DE FR GB IT LI NL**

(71) Anmelder: **STAL-LAVAL Turbin AB**

**S-612 00 Finspäng(SE)**

(72) Erfinder: **Bergsing, Jan Viklund**
**Lövängsvägen 38**
**S-610 20 Kinstad(SE)**

(74) Vertreter: **Boecker, Joachim, Dr.-Ing.**
**Rathenauplatz 2-8**
**D-6000 Frankfurt a.M. 1(DE)**

(54) Anlage zur Gewinnung von Warmwasser oder Dampf.

(57) Anlage zur Gewinnung von Warmwasser oder Dampf, beispielsweise für Fernheizungsnetze. Zu der Anlage gehören ein Kessel (1) und eine Trocknungsanlage (2) mit einem fluidisierbaren Bett (10), in welchem Biobrennstoffe, z.B. Torf, getrocknet werden. Die Trocknungsanlage (2) wird durch Rauchgas und/oder Dampf vom Kessel (1) beheizt, wobei das Rauchgas bzw. der Dampf durch Rohre (11) im Bett (10) strömt. Ferner ist eine Reinigungsanlage (3) vorhanden, in der die festen Stoffe von dem aus der Trocknungsanlage (2) kommenden Dampf abgeschieden werden. Der Dampf wird dann einem Kondensator (18) zugeführt, der in der Rückleitung eines Fernheizungsnetzes (4) liegt. Hier wird der Dampf kondensiert und gibt die in ihm steckende Verdampfungswärme an das Wasser des Fernheizungsnetzes ab. Die Anlage hat einen sehr guten Wirkungsgrad bei der Verbrennung von feuchtem Biobrennstoff.

EP 0 129 631 A1

Patentanwalt und Rechtsanwalt
Dr.-Ing. Dipl.-Ing. Joachim B o e c k e r

**0129631**

6 Frankfurt/Main 1 , 14.6.1983
Rathenauplatz 2 - 8      B/d 21 309 PE
Telefon: (0611) *28 23 55
Telex: 4 189 066 itax d

STAL-LAVAL Turbin AB
Finspang/Schweden

## Anlage zur Gewinnung von Warmwasser oder Dampf

Die Erfindung betrifft eine Anlage zur Gewinnung von Warmwasser oder Dampf gemäß dem Oberbegriff des Anspruches 1. Die Anlage ist insbesondere für Fernheizungsnetze in Gegenden geeignet, in denen Zugang zu Torf besteht.

In einer konventionellen Kesselanlage nimmt der Wirkungsgrad mit zunehmendem Feuchtigkeitsgehalt des Brennstoffes schnell ab, da die für die Verdampfung der Feuchtigkeit im Brennstoff benötigte Wärme mit den Rauchgasen durch den Schornstein verlorengeht.

Um die durch die Feuchtigkeit im Brennstoff entstehenden Verluste zu mindern, kann der Brennstoff in einer mit Überdruck, z.B. 3 bar, arbeitenden Anlage druckgetrocknet werden. Der beim Trocknen entstehende verunreinigte Dampf wird einem Wärmeaustauscher zugeführt, in welchem er reinen Dampf mit niedrigem Druck erzeugt. Die zum Trocknen erforderliche Energie wird in Form von Hochdruckdampf zugeführt. Eine solche Anlage kann mit Vorteil in der Papierindustrie verwendet werden.

Es ist auch bekannt, den feuchten Brennstoff in einer Brennkammer in einem unter Druck stehenden fluidisierten Bett (Wirbelbett) zu verbrennen. Die dabei entstehenden Verbrennungsgase, die nach der Expansion, beispielsweise in einer

/2

0129631
14.6.1983

- 2 -

Turbine auf ca. 3 bar und 50° C, einen großen Dampfinhalt haben, werden einem Kondensator zugeführt, in dem ein Teil des Dampfes kondensiert. Dies hat jedoch den Nachteil, daß die Verdampfungswärme auf einem Temperaturniveau zurückgewonnen wird, das für die Verwendung in einem Fernheizungsnetz zu niedrig ist.

Der Erfindung liegt die Aufgabe zugrunde, eine Anlage der eingangs genannten Art zu entwickeln, in der mit gutem Wirkungsgrad Biobrennstoff mit hohem Feuchtigkeitsgehalt, z.B. Torf, verwertet werden kann.

Zur Lösung dieser Aufgabe wird eine Anlage nach dem Oberbegriff des Anspruches 1 vorgeschlagen, die erfindungsgemäß die im kennzeichnenden Teil des Anspruches 1 genannten Merkmale hat.

Vorteilhafte Weiterbildungen der Erfindung sind in den Unteransprüchen genannt.

Gemäß der Erfindung wird die gute Wirtschaftlichkeit bei der Verwendung feuchter Brennstoffe dadurch erreicht, daß die Anlage so ausgebildet ist, daß die beim Trocknen zum Verdampfen des im Brennstoff enthaltenen Wassers aufgewendete Verdampfungswärme auf einem solchen Temperaturniveau zurückgewonnen wird, daß diese Wärme beispielsweise zur Erhitzung von Wasser in einem Fernheizungsnetz verwendet werden kann. Die Anlage enthält einen Kessel und eine Trocknungsanlage für feuchten Brennstoff, z.B. Torf, der durch die Verbrennungsgase vom Kessel und/oder durch im Kessel erzeugten Dampf erhitzt wird. Die Trocknungsanlage enthält in ihrer Trockenzone ein fluidisierbares Bett. Dieses besteht aus nicht brennbarem Material, wie z.B. Sand. Dieses Bettmaterial wird von dem Verbrennungsgas des Kessels oder durch Dampf erhitzt, der das fluidisierbare Bett durchströmt. Der feuchte Brennstoff wird dem Bett mittels einer geeigneten Zuführvorrichtung zugeführt. Durch Kontakt mit dem heißen Bettmaterial wird der Brennstoff schnell erhitzt und die Feuchtigkeit verdampft. Die Wärmezufuhr wird so gesteuert, daß überhitzter, trockener Dampf gebildet wird. Bei dem Fluidisierungsgas handelt es sich um Dampf. Getrockneter Brennstoff wird mit dem Fluidisierungsdampf zu einem zu der Anlage gehörenden Abscheider, z.B. einem Zyklon, geleitet, in dem Dampf und Brennstoff getrennt werden. Getrockneter Brennstoff wird im unteren Teil des Abscheiders und Dampf im oberen Teil desselben entnommen. Über eine Rückführleitung, in der ein Kompressor liegt, wird ein Teil des Dampfes als Fluidisierungsgas zur Trocknungsanlage zurückgeführt. Der übrige aus der Feuchtigkeit im Brennstoff gebildete Dampf wird einem Kondensator zugeführt, in welchem die Verdampfungswärme zurückgewonnen wird. Dieser Kondensator ist an die Rückleitung eines Fernheizungsnetzes angeschlossen und dient als Vorwärmer für das Fernheizungswasser, wobei dieses auf 50 bis 95°C erhitzt wird. Zu der Anlage gemäß der Erfindung gehört auch ein Wärmeaustauscher (Ekonomiser), der mit dem ebengenannten Kondensator in Reihe liegt und an die Speiseleitung des Fernheizungssystems angeschlossen ist. In diesem Wärmeaustauscher wird der restliche Wärmeinhalt der Verbrennungsgase ausgenutzt, wodurch das Fernheizungswasser auf die gewünschte Zuleitungstemperatur erhitzt wird, die – in Abhängigkeit der Jahreszeit – zwischen 60 und 120° C liegen kann. Dadurch, daß man das fluidisierbare Bett, den Zyklon und den Kondensator bei einem über Atmosphärendruck liegenden Druck arbeiten läßt, kann die Wärme auf einem höheren Temperaturniveau entnommen werden.

Die Erfindung stellt im Vergleich zu konventionellen Anlagen einen erheblichen Fortschritt dar. Um in einer konventionellen Anlage bei der Heizung mit Torf mit einem Feuchtigkeitsgehalt von 65 % eine Leistung von 10 MW zu erzeugen, sind 11,5 t Torf pro Stunde erforderlich. Mit derselben oder einer nur etwas größeren Brennstoffmenge kann in einer Anlage nach der Erfindung dieselbe Wärmeleistung und zusätzlich getrockneter Torf erzeugt werden, der einer Wärmeleistung von

- 4 -

ca. 9 MW entspricht. Aus diesem Torf können Pellets mit einem hohen Brennwert pro Volumeneinheit hergestellt werden, also ein Brennstoff, dessen Transport über längere Strecken wirtschaftlich ist und der Kohle oder Öl in kleinen Anlagen, wie beispielsweise Heizungskesseln in Häusern, ersetzen kann.

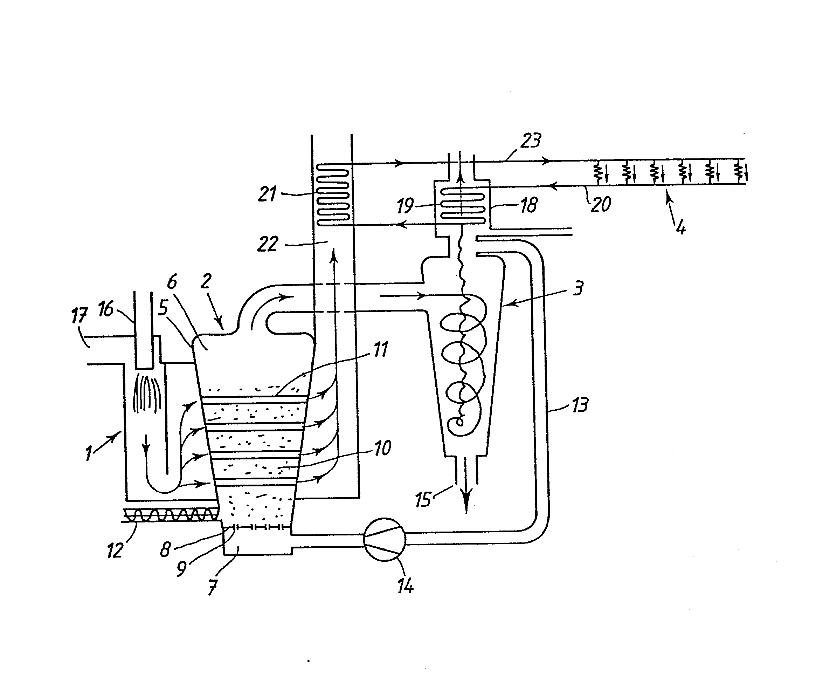

Anhand des in der Figur gezeigten Ausführungsbeispiels soll die Erfindung näher erläutert werden.

Die Figur zeigt einen Kessel 1, eine Trocknungsanlage 2, eine Reinigungsanlage 3 und ein Fernheizungsnetz 4. Die Trocknungsanlage besteht aus einem Behälter 5, der unterteilt ist in einen Trocknungsraum 6 und eine Verteilungskammer 7 für Fluidisierungsgas. Zwischen dem Trocknungsraum 6 und der Verteilungskammer 7 befindet sich ein Boden 8 mit Durchtrittsdüsen 9, durch welche das Fluidisierungsgas auf das Bett 10 verteilt wird. Der Trocknungsraum 6 ist mit durchgehenden Rohren 11 versehen, durch welche vom Kessel 1 kommende Verbrennungsgase strömen, die das Material des Bettes 10 erhitzen. Als Bettmaterial dient ein nicht brennbares Material, z.B. Sand. Durch eine Zuführvorrichtung 12 wird dem Bett 10 feuchter Biobrennstoff, z.B. Torf, zugeführt. Beim Trocknen verdampft die im Biobrennstoff enthaltene Feuchtigkeit. Das getrocknete leichte Material wird vom Fluidisierungsgas zu der Reinigungsanlage 3 mitgenommen, wo es vom Gas getrennt wird. Als Fluidisierungsgas wird Dampf verwendet. Dieser wird der Reinigungsanlage 3 entnommen und über eine Rückführleitung 13, in der ein Kompressor 14 angeordnet ist, der Verteilungskammer 7 wieder zugeführt. Die Temperatur in der Trocknungsanlage wird so hoch gehalten, daß der die Trocknungsanlage verlassende Dampf trocken ist, wodurch eine Kondensation in der Reinigungsanlage vermieden wird. Abgeschiedenes, getrocknetes Material wird durch eine Öffnung 15 im unteren Teil der Reinigungsanlage entnommen. Ein Teil dieses entnommenen Materials dient als Brennstoff für die Anlage und wird der Düse 16 im Brenner des Kessels zugeführt. Ver-

/5

- 5 -

brennungsluft wird dem Brenner durch die Leitung 17 zugeführt.
Das übrige entnommene Material kann für andere Zwecke verwendet werden. Beispielsweise kann es zu Pellets verarbeitet
und verkauft werden.

Dampf von der Reinigungsanlage 3 wird zum Kondensator 18 geleitet, dessen Rohrbündel 19 an die Rückleitung 20 des Fernheizungsnetzes 4 angeschlossen ist. In diesem Kondensator
18 wird also die beim Trocknen in den Dampf hineingesteckte
Verdampfungswärme wieder zurückgewonnen. Bei einem Dampfdruck von 1 bar ist eine Erhitzung des Fernheizungswassers
auf 60 bis 95° C möglich. Welche Temperatur man hierbei
wählt, richtet sich vorzugsweise nach einer Optimierungsrechnung, in die u.a. die Kosten für den Kondensator eingehen.
Die Restwärme der aus der Trocknungsanlage 2 austretenden
Verbrennungsgase wird von einem Ekonomiser (Abgasvorwärmer)
21 im Rauchgaskanal 22 verwertet. Der Ekonomiser 21 ist
mit dem Rohrbündel 19 des Kondensators 18 in Reihe geschaltet und an die Speiseleitung 22 des Fernheizungsnetzes angeschlossen. In dem Ekonomiser 21 wird das Wasser des Fernheizungsnetzes 4 auf die für die betreffende Jahreszeit gewünschte Zufuhrtemperatur erhitzt.

Patentanwalt und Rechtsanwalt
Dr.-Ing. Dipl.-Ing. Joachim Boecker

- 6 -

**0129631**

6 Frankfurt/Main 1 , 14.6.1983.
Rathenauplatz 2-8
Telefon: (0611) *28 23 55    B/d 21 309 PE
Telex: 4 189 066 itax d

## PATENTANSPRÜCHE:

1. Anlage zur Gewinnung von Warmwasser oder Dampf, beispielsweise für Fernheizungsnetze, dadurch gekennzeichnet, daß ein Kessel (1) und eine Trocknungsanlage (2) mit einem fluidisierbaren Bett (10) zum Trocknen von Biobrennstoff vorhanden ist, daß die Trocknungsanlage (2) mit Rauchgas und/oder mit Dampf vom Kessel (1), das/der durch Rohre 11 in dem Bett (1o) strömt, heizbar ist, daß eine Reinigungsanlage (3) vorhanden ist zur Abscheidung fester Stoffe in dem von der Trocknungsanlage (2) kommenden Dampf und daß ein Kondensator (18) zur Kondensation von aus der Reinigungsanlage (3) kommenden Dampf vorhanden ist, welcher Kondensator (18) in einem Netz (4) zur Verteilung von wärmetransportierendem Wasser oder Dampf liegt.

2. Anlage nach Anspruch 1, dadurch gekennzeichnet, daß zu dem Fernheizungsnetz (4) ein mit dem Kondensator (18) in Reihe geschalteter Wärmeaustauscher, z.B. ein Rohrbündel(21), gehört, in dem das Wasser des Fernheizungsnetzes (4) durch die Rauchgase des Kessels (1) erhitzt wird.

3. Anlage nach Anspruch 1 oder 2, dadurch gekennzeichnet, daß eine Rückführleitung (13) für Dampf von der Trocknungsanlage (2) zu einer unter dem Bett (10) angeordneten Verteilungskammer (7) zur Fluidisierung des Bettes (10) vorhanden ist.

14.C.1983
21 309 PE
0129631

1/1

Europäisches
Patentamt

**EUROPÄISCHER RECHERCHENBERICHT**

**0129631**
Nummer der Anmeldung

EP 83 71 0042

## EINSCHLÄGIGE DOKUMENTE

| Kategorie | ·Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DD-A- 135 762 (SCHWARZ et al.) <br> * Figur * <br><br> --- | 1 | F 24 D 3/00 <br> F 24 H 1/00 |
| A | GB-A-2 093 723 (WATTS BLAKE BEARNE & CO. LTD.) <br> * Figur 1, Position 26 * <br><br> ----- | 1 | |

| RECHERCHIERTE SACHGEBIETE (Int. Cl. ³) |
|---|
| C 10 F 5/00 <br> F 01 K 17/00 <br> F 23 K 1/00 <br> F 24 D 1/00 <br> F 24 D 3/00 <br> F 24 D 11/00 <br> F 24 D 15/00 <br> F 24 H 1/00 |

Der vorliegende Recherchenbericht wurde für alle Patentansprüche erstellt.

| Recherchenort | Abschlußdatum der Recherche | Prüfer |
|---|---|---|
| BERLIN | 07-02-1984 | PIEPER C |